# EUROPEAN PATENT SPECIFICATION

(11) **EP 4 517 485 B1**
(45) Date of publication and mention of the grant of the patent: **12.08.2026**
(21) Application number: 24163250.4
(22) Date of filing: 13.03.2024
(51) Int. Cl.: G06F 1/3225, G06F 1/3234, G06F 3/06

(54) **ELECTRONIC DEVICE AND METHOD WITH MEMORY OPERATION MODE CONTROL**
ELEKTRONISCHE VORRICHTUNG UND VERFAHREN MIT SPEICHERBETRIEBSMODUSSTEUERUNG
DISPOSITIF ÉLECTRONIQUE ET PROCÉDÉ DE COMMANDE DE MODE DE FONCTIONNEMENT DE MÉMOIRE

(30) Priority: 01.09.2023 KR 20230116407
(43) Date of publication of application: 05.03.2025
(73) Proprietor: Samsung Electronics Co., Ltd., Suwon-si, Gyeonggi-do 16677 (KR)
(72) Inventor: Lee, Yong In, 16678 Suwon-si, Gyeonggi-do (KR); Kang, Mincheol, 16678 Suwon-si, Gyeonggi-do (KR)
(74) Representative: Grünecker Patent- und Rechtsanwälte PartG mbB

(56) References cited:
- US-A1- 2015 185 813
- US-A1- 2017 220 280
- US-A1- 2019 042 121
- US-A1- 2020 241 984
- US-A1- 2021 405 728

## Description

### BACKGROUND

### 1. Field

The following description relates to an electronic device and method with memory operation mode control.

### 2. Description of Related Art

Dynamic throttling control may be used to control the temperature of a memory apparatus. Dynamic throttling control may be implemented by monitoring the temperature through a temperature sensor and by controlling the operational efficiency of a memory apparatus through control of the bandwidth by a memory controller in a central processing unit (CPU) or controlling a dynamic random-access memory (DRAM) refresh time for a predetermined goal. As a result, the total power consumption of the memory apparatus may be controlled, such that a configuration of controlling a closed loop to a desired temperature may be generated.

Using Compute Express Link (CXL), a memory pool formed through several systems for a host may be provided through memory pooling. A dynamic throttling control method for one memory apparatus may be difficult to efficiently control memory apparatuses included in a memory pool.
US 2015/0185813 A1 discloses systems and methods for dynamically allocating and/or redistributing thermal budget to each memory group in a memory array from a total memory thermal budget based on the workload of each memory group.
US 2021/0405728 A1 discloses a method for dynamically performing power capping with respect to a group of computing systems.
It is the object of the present invention to provide an improved method for efficiently controlling memory apparatuses included in a memory pool.
This object is solved by the subject matter of the independent claims.
Embodiments are defined by the dependent claims.
In the following, when the term "embodiment" relates to unclaimed combinations of features, said term has to be understood as referring to examples providing context for understanding the present invention.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

In one or more general aspects, a memory box includes memory devices comprising memory cells configured to store data, a sensor configured to measure state information of the memory devices, and a mode manager configured to divide the memory devices into a plurality of groups, receive a priority between the plurality of groups from a host device, receive the state information from the sensor, and dynamically control an operation mode of the plurality of groups based on the priority and the state information.

For the dynamically controlling of the operation mode, the mode manager may be configured to determine a current operation mode of the plurality of groups according to the priority, compare the state information with marginal resource information corresponding to the state information, and change the current operation mode of the plurality of groups based on a result of the comparing.

For the dividing of the memory devices, the mode manager may be configured to divide the memory devices into the plurality of groups according to characteristics of the memory devices.

The memory devices may have same characteristics, and the mode manager may be configured to divide the memory devices into the plurality of groups according to an operational importance of the memory devices.

The mode manager may include a controller configured to control the plurality of groups to operate in a corresponding operation mode.

For the dynamically controlling of the operation mode, the mode manager may be configured to set a group of the plurality of groups of which the priority is higher to be in a first operation mode to operate with a predetermined performance, and set a group of the plurality of groups of which the priority is lower to be in a second operation mode to operate within a range not exceeding marginal resource information corresponding to the state information.

The mode manager may include a first controller configured to control the group of which the priority is higher to operate in the first operation mode, and a second controller configured to control the group of which the priority is lower to operate in the second operation mode.

The memory devices may include Compute Express Link (CXL) memory devices.

The memory box may include a switch configured to connect the memory devices to the host device, wherein, for the receiving of the priority, the mode manager may be configured to receive the priority between the plurality of groups from the host device through the switch.

A computing system may include the memory box, and the host device.

The computing may include a switch configured to connect the host device to the memory box.

In one or more general aspects, a switch includes a processor configured to divide memory devices into a plurality of groups, receive a priority between the plurality of groups from a host device, receive state information of the memory devices from a sensor, and dynamically control an operation mode of the plurality of groups based on the priority and the state information.

The switch may include a bandwidth limiter configured to control a bandwidth for data transfer between the host device and the plurality of groups, and a controller configured to control the bandwidth limiter such that the plurality of groups operate in a corresponding operation mode.

A memory box may include the switch, wherein the switch may be configured to connect the memory device to the host device, the memory devices comprising memory cells configured to store data, and the sensor configured to measure the state information.

In one or more general aspects, a computing system includes a host device, a plurality of memory boxes comprising memory devices comprising memory cells configured to store data, a sensor configured to measure state information of the memory boxes, and a mode manager configured to divide the memory boxes into a plurality of groups, receive the state information from the sensor, and dynamically control an operation mode of the plurality of groups based on the state information.

For the dividing of the memory boxes, the mode manager may be configured to divide the memory boxes into the plurality of groups according to characteristics of the memory boxes.

The memory boxes may have same characteristics, and for the dividing of the memory boxes, the mode manager may be configured to divide the memory boxes into the plurality of groups according to an operational importance of the memory boxes.

A rack may include the computing system, and a plurality of compute servers comprising the host device, wherein the state information is of the compute servers and the memory boxes, and wherein the mode manager may be configured to divide the compute servers and the memory boxes into the plurality of groups, receive a priority between the plurality of groups, and dynamically control the operation mode of the plurality of groups based on the priority and the state information.

In one or more general aspects, a control method includes the steps defined in claim 7.

The dynamically controlling of the operation mode may include determining a current operation mode of the plurality of groups according to the priority, comparing the state information with marginal resource information corresponding to the state information, and changing the current operation mode of the plurality of groups based on a result of the comparing.

The dividing may include dividing the memory devices into the plurality of groups according to characteristics of the memory devices.

The memory devices may have same characteristics, and the dividing may include dividing the memory devices into the plurality of groups according to an operational importance of the memory devices.

Other features and aspects will be apparent from the following detailed description, the drawings, and the claims.

### BRIEF DESCRIPTION OF THE DRAWINGS

FIG. 1 is a diagram illustrating a memory device control method according to one or more embodiments.
FIG. 2A is a diagram illustrating a schematic configuration of a host device and a memory box according to one or more embodiments.
FIG. 2B is a diagram illustrating an operating method of a mode manager according to one or more embodiments.
FIG. 2C is a diagram illustrating a schematic configuration of a host device and a Compute Express Link (CXL) memory apparatus according to one or more embodiments.
FIG. 3 is a diagram illustrating an example of a memory box including homogeneous memory devices according to one or more embodiments.
FIGS. 4 and 5 are drawings illustrating an example of a memory box including heterogeneous memory devices according to one or more embodiments.
FIG. 6 is a diagram illustrating a schematic configuration of a host device and a memory box according to another example.
FIG. 7 is a diagram illustrating a schematic configuration of a host device and a memory box according to one or more embodiments.
FIG. 8 is a diagram illustrating a schematic configuration of a rack cabinet according to one or more embodiments.
FIG. 9 is a flowchart illustrating a control method according to one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "connected to," "coupled to," or "joined to" another component or element, it may be directly (e.g., in contact with the other component or element) "connected to," "coupled to," or "joined to" the other component or element, or there may reasonably be one or more other components or elements intervening therebetween. When a component or element is described as "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof. The use of the term "may" herein with respect to an example or embodiment (for example, as to what an example or embodiment may include or implement) means that at least one example or embodiment exists where such a feature is included or implemented, while all examples are not limited thereto.

The phrases "at least one of A, B, and C," "at least one of A, B, or C," and the like are intended to have disjunctive meanings, and these phrases "at least one of A, B, and C," "at least one of A, B, or C," and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as will be commonly understood consistent with and after an understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

Hereinafter, examples will be described in detail with reference to the accompanying drawings. When describing the examples with reference to the accompanying drawings, like reference numerals refer to like elements and a repeated description related thereto will be omitted.

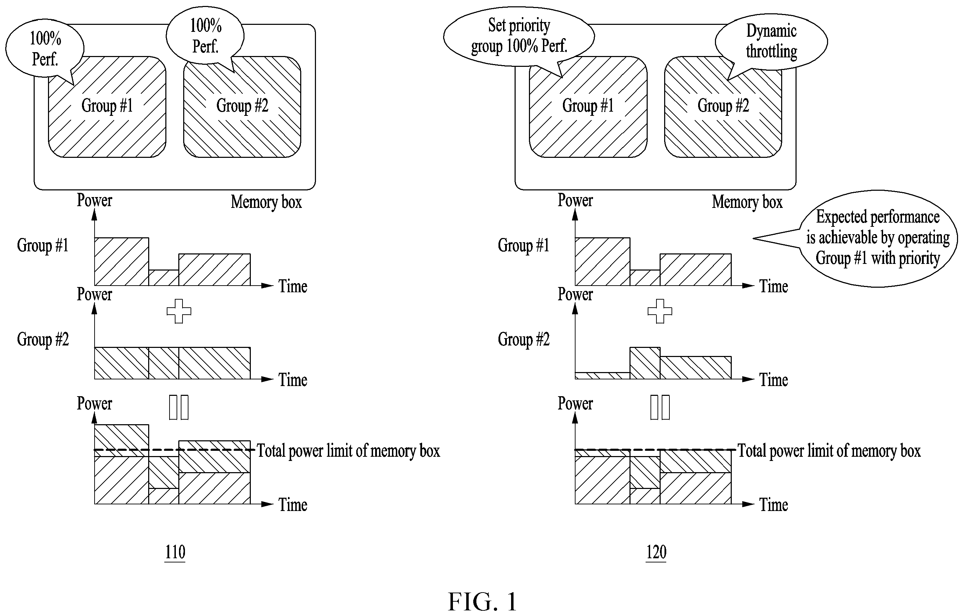

FIG. 1 is a diagram illustrating a memory device control method according to one or more embodiments.

Referring to FIG. 1, for interface technology such as Compute Express Link (CXL), a memory box in which a plurality of memory devices are integrated may be provided. Compute Express Link (CXL) is a connecting technology that supports cache coherence for processors, memory expansion, and accelerators. When a processor and an additional component are connected using CXL, CXL technology may maintain memory consistency between a memory space of the processor and a memory space of the additional component, increase performance through resource sharing, reduce the complexity of a software stack, and reduce the overall system costs. When an accelerator complements processors in supporting applications such as artificial intelligence and machine learning, CXL may be provided as an open standard interface for high-speed communication. CXL may provide a comprehensive interface environment for connecting multiple components such as a central processing unit (CPU), a memory, an accelerator, and other peripheral devices. For example, a memory pool formed through several systems for a host may be provided through CXL memory pooling based on the expandability of CXL.

Hereinafter, examples of a method of controlling a plurality of memory devices in a memory pool environment will be described. However, for ease of description, examples of a memory pool environment provided by CXL will be described, but examples are not limited thereto. The memory pool environment may be provided by various interface technologies for providing an interface environment for connecting multiple components such as a memory, an accelerator, and other peripheral devices.

Example 110 shows the power consumed when memory devices in a memory box are divided into Group #1 and Group #2 and operate at 100% performance without special control of the two groups. In this case, the sum of powers consumed by the two groups may exceed the total power limit of the memory box in a predetermined time period.

Example 120 shows the power consumed when memory devices in a memory box operate through the memory device control method according to one or more embodiments. As described in detail below, the control method according to one or more embodiments may operate a desired group (e.g., Group #1) at predetermined performance with priority and control the other group (e.g., Group #2) with remaining resources (e.g., power) through a closed-loop controller (e.g., a proportional-integral-differential controller or a dynamic thermal throttling controller) such that the sum of powers consumed by the two groups may not exceed the total power limit of the memory box.

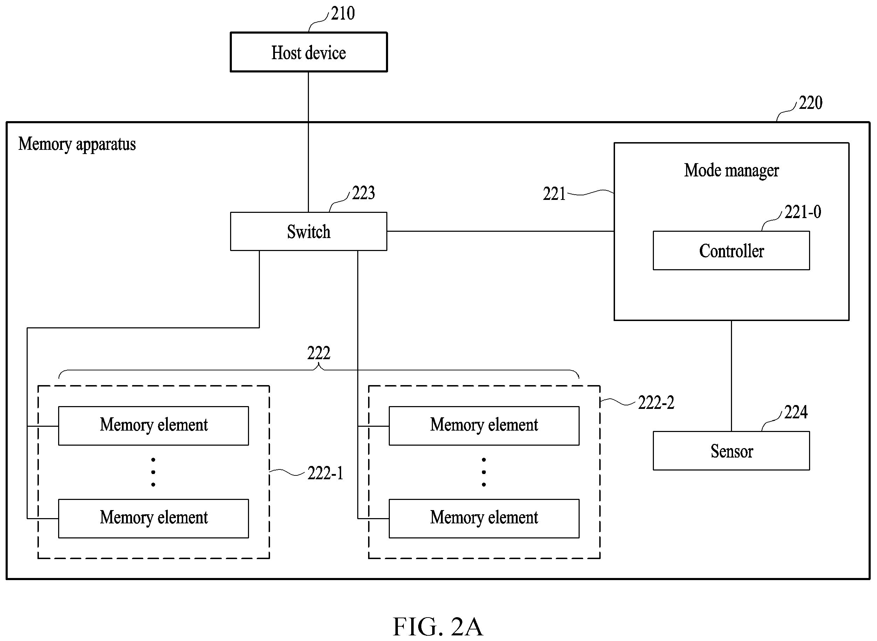

FIG. 2A is a diagram illustrating a schematic configuration of a host device and a memory box according to one or more embodiments. The description provided with reference to FIG. 1 may apply to FIG. 2A likewise.

Referring to FIG. 2A, according to an example, a computing system may include a host device 210 (e.g., including one or more processors) and a memory apparatus 220. The host device 210 may access memory elements 222 of the memory apparatus 220 using an interface (e.g., a CXL interface) and use the memory elements 222. The memory apparatus 220 may include the memory elements 222, a mode manager 221 (e.g., including one or more processors), a switch 223 (e.g., a CXL switch), and a sensor 224 (e.g., one or more sensors). The switch 223 may provide connectivity between the host device 210 and the memory apparatus 220. The memory elements 222 may store data. Interface technology (e.g., CXL interface technology) may be used for the connection between the host device 210 and the memory apparatus 220 and/or the connection between the mode manager 221 and the memory elements 222.

The memory elements 222 may be a general term for various levels of memory types. For example, the memory elements 222 may correspond to memory cell groups or memory devices. A memory cell group may be a group (e.g., a memory chip) including a plurality of memory cells. A memory device may be a device including one or more memory modules. Each memory module may include a plurality of memory groups. A memory device may correspond to a device with a large capacity relative to a memory cell group.

When the memory elements 222 correspond to memory cell groups, the memory apparatus 220 may correspond to a memory device. When the memory elements 222 correspond to memory devices, the memory apparatus 220 may correspond to a memory box. A memory box may correspond to a large memory storage with a large capacity compared to a memory device. Hereinafter, for ease of description, the memory elements 222 corresponding to memory devices and the memory apparatus 220 corresponding to a memory box will be described, but examples are not limited thereto. In other words, the description of a memory cell group, a memory module, a memory device, and a memory box is merely an example, and the memory apparatus 220 and the memory elements 222 may correspond to other levels of memories not illustrated herein.

The memory device may include dynamic random-access memories (DRAMs), static random-access memories (SRAMs), magnetic random-access memories (MRAMs), parallel random-access memories (PRAMs), and self-selecting memory using an ovonic threshold switching (OTS) material. However, the configuration of the memory device is not limited thereto.

The host device 210 and the memory apparatus 220 may correspond to devices that are physically separate from each other. The memory apparatus 220 may correspond to an apparatus for providing storage space to the host device 210, the apparatus being independent of the host device 210.

The mode manager 221 may divide the memory elements 222 into a plurality of groups. The mode manager 221 may divide the memory elements 222 to be controlled into the plurality of groups based on characteristics or performance of the memory elements 222. As a non-limiting example, the characteristics of the memory elements 222 may indicate a type of the memory elements (e.g., double data rate (DDR) 4 or DDR5), and the mode manager 221 may divide the memory elements 222 into a first group of a first type (e.g., DDR4) and a second group of a second type (e.g., DDR5). The mode manager 221 may receive a priority between the plurality of groups from the host device 210 through the switch 223. The priority may be set by a user or determined (e.g., by the host device 210) through a predetermined policy.

The sensor 224 may be connected to the mode manager 221 and may measure state information of the memory elements 222 in the memory apparatus 220. The state information may include at least one of the operation voltage, operation temperature, operation time, and operation count of the memory elements 222. The sensor 224 may include sensing devices configured to measure at least one of the operation voltage, operation temperature, operation time, and operation count. For example, the sensor 224 may include a power monitor, a bandwidth monitor, a latency monitor, a current sensor, a voltage sensor, and a temperature sensor, but is not limited thereto.

The state information measured by the sensor 224 may be provided to the mode manager 221 as a state in which individual values are added up such that the mode manager 221 may determine, based on provided the state information, the overall performance state of the system or as a maximum value in the case of temperature. For example, the state information may be the total power consumption converted based on the voltage and current applied to the system, measured by the sensor 224.

The mode manager 221 may receive the state information from the sensor 224 and dynamically control an operation mode of the plurality of groups based on the priority and the state information. The mode manager 221 may determine a current operation mode of the plurality of groups according to the priority, compare the state information with marginal resource information corresponding to the state information, and change the current operation mode of the plurality of groups based on a result of the comparing. The marginal resource information may be information on resource availability throughout the memory apparatus 220. For example, the marginal resource information may include the total power limit of the memory apparatus 220, the overall temperature limit of the memory apparatus 220, and the overall performance limit of the memory apparatus 220.

For example, the mode manager 221 may divide the memory elements 222 into two groups, a first group 222-1 and a second group 222-2, set a group (e.g., the first group 222-1) of which the priority is higher to be in a first operation mode to operate with a predetermined performance, and set a group (e.g., the second group 222-2) of which the priority is lower to be in a second operation mode to operate within a range not exceeding marginal resource information corresponding to the state information.

The mode manager 221 may include various control means such as a controller 221-0 (e.g., one or more processors). The controller 221-0 may be a device configured to control the memory elements 222 included in the respective groups in the operation mode set by the mode manager 221, and the mode manager 221 may include one or more controllers.

The mode manager 221 may control the group of which the priority is higher (hereinafter, "the group of which the priority is high" may also be referred to as "the group having priority") through a first controller included in the mode manager 221 and control the group of which the priority is lower through a second controller included in the mode manager 221, such that the group of which the priority is higher may operate with a predetermined performance (e.g., a target power consumption). When the sum of the power consumption of the first group 222-1 and the power consumption of the second group 222-2 exceeds the total power limit of the memory apparatus 220, both groups may be controlled through the second controller, and the operation mode of the group (e.g., the first group 222-1) of which the priority is higher may be changed to a second operation mode such that the sum of the power consumption of the first group 222-1 and the power consumption of the second group 222-2 is within the total power limit of the memory apparatus 220. When the sum of the power consumption of the first group 222-1 and the power consumption of the second group 222-2 is less than the total power limit of the memory apparatus 220, the operation mode of the group (e.g., the first group 222-1) of which the priority is higher may be changed back to a first operation mode.

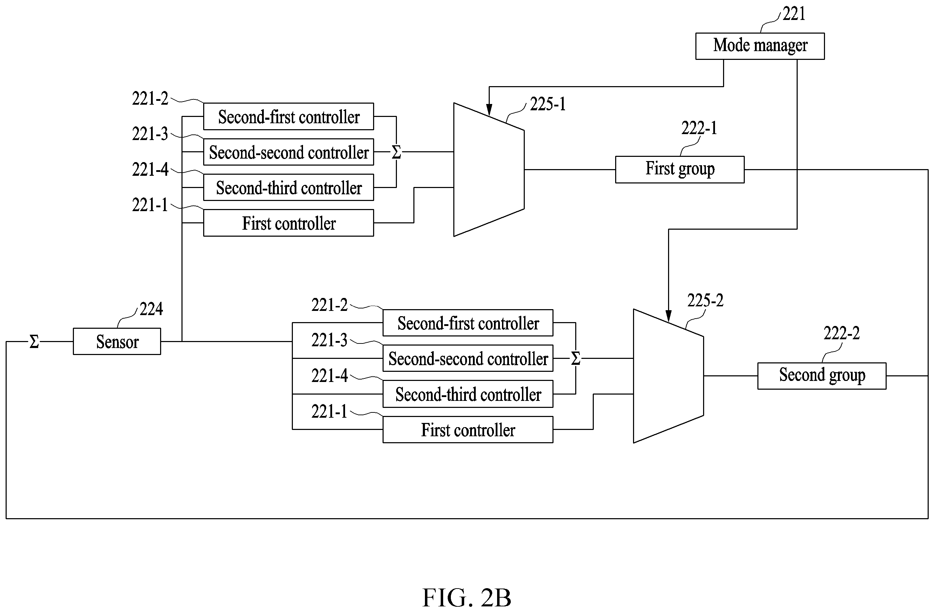

FIG. 2B is a diagram illustrating an operating method of a mode manager according to one or more embodiments. The description provided with reference to FIGS. 1 and 2A may apply to FIG. 2B likewise.

Referring to FIG. 2B, according to an example, the mode manager 221 may divide the memory elements 222 into the first group 222-1 and the second group 222-2 and control an operation mode of the first group 222-1 and the second group 222-2.

Although FIG. 2B illustrates a plurality of controllers (e.g., first controllers 221-1, second-first controllers 221-2, second-second controllers 221-3, and second-third controllers 221-4) and a plurality of multiplexers (e.g., a first multiplexer 225-1 and a second multiplexer 225-2) separately from the mode manager 221, the mode manager 221 may include the plurality of controllers and the plurality of multiplexers.

The second controller described with reference to FIG. 2A may include a second-first controller 221-2, a second-second controller 221-3, and a second-third controller 221-4. The second-first controller 221-2 may be a proportional controller, the second-second controller 221-3 may be an integral controller, and the second-third controller 221-4 may be a derivative controller. However, the type and number of second controllers are not limited to those described above.

The first multiplexer 225-1 may receive a control signal to control the first group 222-1 in the first operation mode from the mode manager 221 and determine a signal from the first controller 221-1 to be an output. The first controller 221-1 may control the first group 222-1 to operate at a predetermined performance (e.g., a target power consumption).

The second multiplexer 225-2 may receive a control signal to control the second group 222-2 in the second operation mode from the mode manager 221 and determine a signal from the second controller (e.g., the sum of the second-first controller 221-2, the second-second controller 221-3, and the second-third controller 221-4) to be an output. The second group 222-2 may be controlled in a closed loop by the second controller.

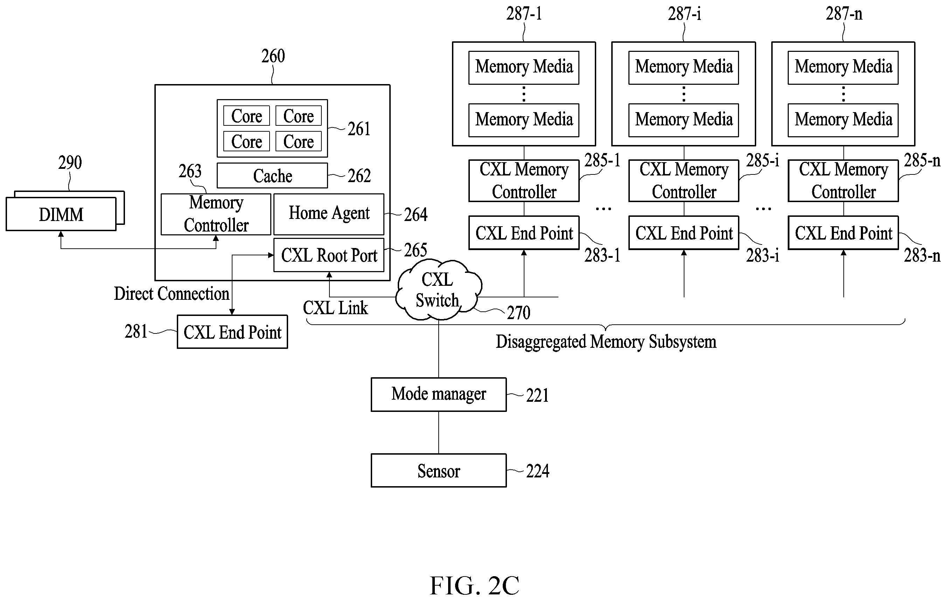

FIG. 2C is a diagram illustrating a schematic configuration of a host device and a Compute Express Link (CXL) memory apparatus according to one or more embodiments. The description provided with reference to FIGS. 1 and 2B may apply to FIG. 2C likewise. For example, a host device 260 and a CXL switch 270 of FIG. 2C may correspond to the host device 210 and the switch 223 described with reference to FIG. 2A, respectively, and the description of the mode manager 221 and the sensor 224 provided with reference to FIG. 2A may apply to the mode manager 221 and the sensor 224 of FIG. 2C likewise.

Referring to FIG. 2C, the host device 260 may be, for example, a CPU. The host device 260 may include one or more cores 261, a cache 262, a memory controller 263, and a home agent 264. The cache 262 may be, for example, a last level cache (LLC). The home agent 264 may be a logic for performing data synchronization between data in the cache 262 (e.g., LLC) and data in a remote address to maintain cache coherence. The home agent 264 may function to manage access to an allocated address area and maintain cache coherence. A dual in-line memory module (DIMM) 290 may be a memory module including multiple DRAM chips mounted on a circuit board, and may be used as the main memory unit of a computer. The DIMM 290 may be controlled by the memory controller 263 of the host device 260.

The host device 260 may be connected to a plurality of CXL endpoints 283-1 to 283-n through the CXL switch 270, and such connection may be referred to as a CXL link. Alternatively or additionally, the host device 260 may be connected directly to a CXL endpoint 281, and such connection may be referred to as a direct connection. A CXL root port 265 may be a connecting terminal that connects the host device 260 and the CXL switch 270 and/or connects the host device 260 and the CXL endpoint 281.

A plurality of CXL memory devices may be connected to the host device 260 through the CXL switch 270, and each CXL memory device may include a CXL endpoint, a CXL memory controller, and a memory media set. For example, n (n being a natural number) memory devices may be connected to the host device 260 through the CXL switch 270, and an i-th (i being a natural number between 1 and n, inclusive) CXL memory device may include a CXL endpoint 283-i, a CXL memory controller 285-i, and a set of one or more memory media 287-i. Memory media may be a memory package, which is a unit connected to a memory interface. For example, in the case of DRAM, memory media may be a DRAM package, which is a unit connected to a DRAM interface. In the case of DDR, DIMM may be configured with eight DRAM packages, and thus, a memory media set may include eight memory media.

A CXL memory device may expand through the CXL switch 270, and the CXL endpoints 283-1 to 283-n, the CXL switch 270, the CXL memory controllers 285-1 to 285-n, and the memory media set 287-1 to 287-n may constitute a disaggregated memory subsystem.

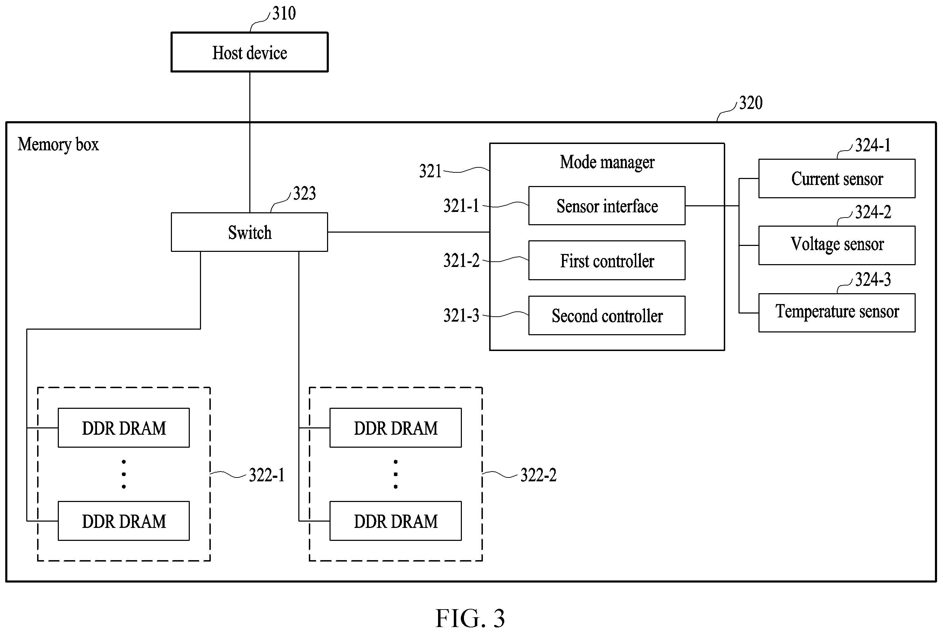

FIG. 3 is a diagram illustrating an example of a memory box including homogeneous memory devices according to one or more embodiments. The description provided with reference to FIGS. 1 to 2B may apply to FIG. 3 likewise.

Referring to FIG. 3, according to an example, a host device 310 may access memory devices in a memory box 320 using an interface (e.g., a CXL interface) and use the memory devices. The memory box 320 may include the memory devices, a mode manager 321, a switch 323 (e.g., a CXL switch), and sensors (e.g., a current sensor 324-1, a voltage sensor 324-2, and a temperature sensor 324-3). The mode manager 321 may include a sensor interface 321-1, a first controller 321-2, and a second controller 321-3. The mode manager 321 may receive state information measured by the current sensor 324-1, the voltage sensor 324-2, and the temperature sensor 324-3 through the sensor interface 321-1.

The memory box 320 may include homogeneous memory devices. For example, the memory box 320 may include homogeneous DDR DRAMs.

The mode manager 321 may divide the memory devices into a plurality of groups (e.g., a first group 322-1 and a second group 322-2) according to a predetermined purpose. For example, the mode manager 321 may divide the memory devices into the first group 322-1 and the second group 322-2 according to an operational importance of a DRAM area provided to the memory box 320 by the host device 310. Furthermore, the mode manager 321 may set the first group 322-1 as a group having a higher priority and the second group 322-2 as a group having a lower priority according to the operational importance of the DRAM area.

The mode manager 321 may control the first group 322-1 of which the priority is higher through the first controller 321-2 and control the second group 322-2 of which the priority is lower through the second controller 321-3, such that the first group 322-1 may operate with a predetermined performance (e.g., a target power consumption).

FIG. 3 shows an example of dividing memory devices into two memory groups, but examples are not necessarily limited thereto. Depending on the design, the number of groups may vary. Furthermore, FIG. 3 shows an example of a memory box including DDR DRAMs, but various memory devices other than DDR DRAM may be adopted.

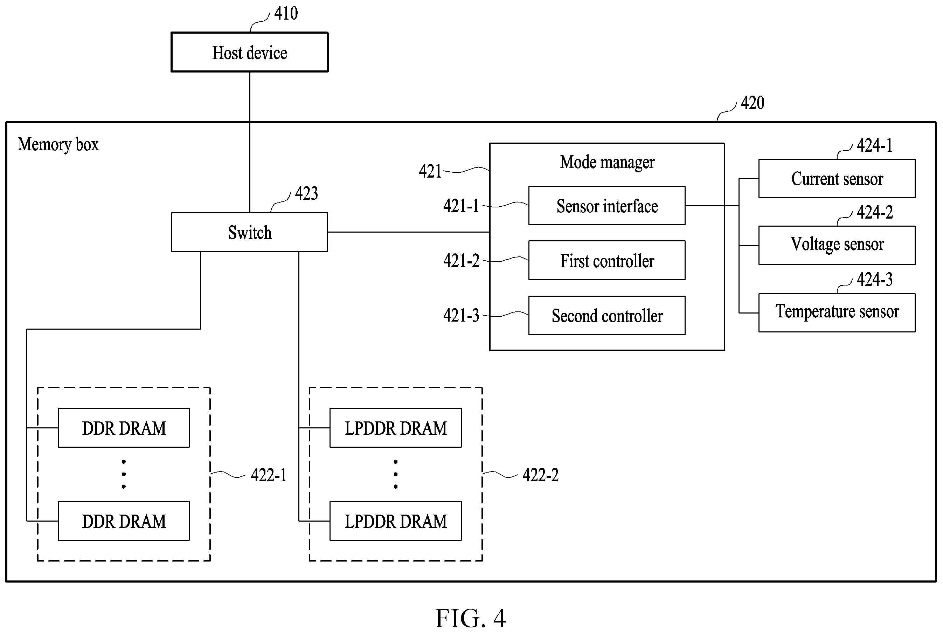

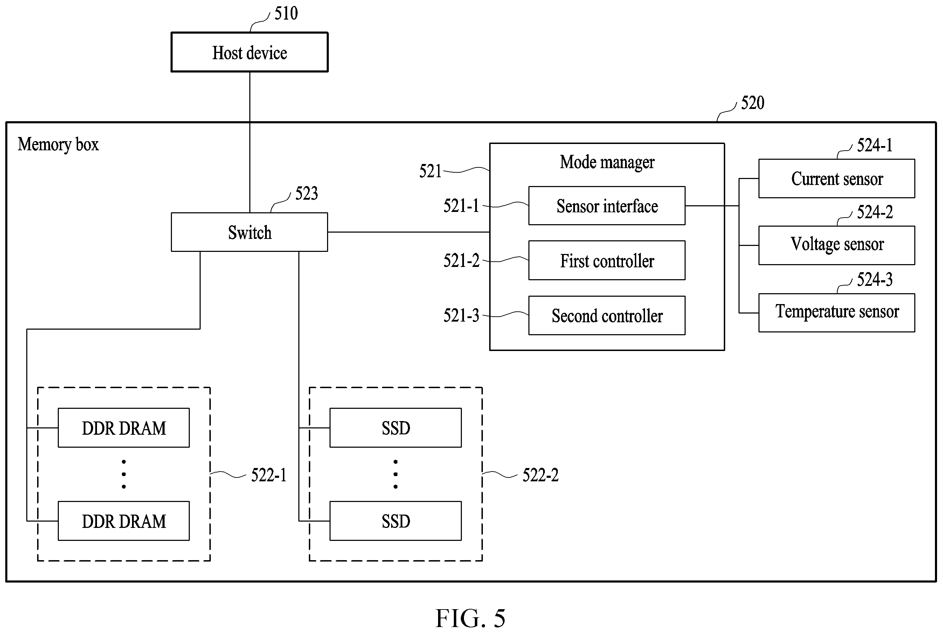

FIGS. 4 and 5 are drawings illustrating an example of a memory box including heterogeneous memory devices according to one or more embodiments. The description provided with reference to FIGS. 1 to 2B may apply to FIGS. 4 and 5 likewise.

Referring to FIG. 4, according to an example, a host device 410 may access memory devices in a memory box 420 using an interface (e.g., a CXL interface) and use the memory devices. The memory box 420 may include the memory devices, a mode manager 421, a switch 423 (e.g., a CXL switch), and sensors (e.g., a current sensor 424-1, a voltage sensor 424-2, and a temperature sensor 424-3). The mode manager 421 may include a sensor interface 421-1, a first controller 421-2, and a second controller 421-3. The mode manager 421 may receive state information measured by the current sensor 424-1, the voltage sensor 424-2, and the temperature sensor 424-3 through the sensor interface 421-1.

The memory box 420 may include heterogeneous memory devices. For example, the memory devices may include double data rate (DDR) DRAMs and low-power double data rate (LPDDR) DRAMs. The mode manager 421 may divide the memory devices into a first group 422-1 including DDR DRAMs and a second group 422-2 including LPDDR DRAMs.

DDR DRAM may have superior DRAM latency but great power consumption compared to LPDDR DRAM, whereas LPDDR may have good signal integrity due to a short signal distance in package implementation to provide a high bandwidth.

The mode manager 421 may set the first group 422-1 including DDR DRAMs as a group of which the priority is higher and set the second group 422-2 including LPDDR DRAMs as a group of which the priority is lower. By setting the priority as described above, the memory box 420 of one or more embodiments may lower the operation bandwidth and control the power consumption by flexibly changing the operation speed of the second group 422-2 including LPDDR DRAMs while guaranteeing the latency of the first group 422-1 including DDR DRAMs. In particular, LPDDR DRAM may be excellent in terms of idle power compared to DDR DRAM and thus, may minimize the effect of the first group 422-1 including DDR DRAMs on power due to idleness.

When the mode manager 421 changes the second group 422-2 including LPDDR DRAMs to the group of which the priority is higher, the power consumption may be controlled by lowering the bandwidth of the first group 422-1 including DDR DRAMs while taking a high bandwidth gain of LPDDR, and thus, operation may be performed with performance characteristics suitable for the purpose within a power limit.

The mode manager 421 may control the group of which the priority is higher through the first controller 421-2 and control the group of which the priority is lower through the second controller 421-3, such that the group of which the priority is higher may operate with a predetermined performance (e.g., a target power consumption).

Referring to FIG. 5, according to an example, a host device 510 may access memory devices in a memory box 520 using an interface (e.g., a CXL interface) and use the memory devices. The memory box 520 may include the memory devices, a mode manager 521, a switch 523 (e.g., a CXL switch), and sensors (e.g., a current sensor 524-1, a voltage sensor 524-2, and a temperature sensor 524-3). The mode manager 521 may include a sensor interface 521-1, a first controller 521-2, and a second controller 521-3. The mode manager 521 may receive state information measured by the current sensor 524-1, the voltage sensor 524-2, and the temperature sensor 524-3 through the sensor interface 521-1.

The memory box 520 may include heterogeneous memory devices. For example, the memory devices may include double data rate (DDR) DRAMs and solid-state drives (SSDs). The mode manager 521 may divide the memory devices into a first group 522-1 including DDR DRAMs and a second group 522-2 including SSDs.

Temporary power support from batteries, capacitors, and supercapacitors may be available for SSD to prevent data damage due to a sudden power loss, and thus, various operation forms may be implemented.

The mode manager 521 may set the second group 522-2 including SSDs as a group of which the priority is higher and set the first group 522-1 including DDR DRAMs as a group of which the priority is lower. By setting the priority as described above, the memory box 520 of one or more embodiments may guarantee the power budget to the second group 522-2 including SSDs, which may enable operation in a stable data management situation and thereby ensure data storage and data integrity.

When a power loss occurs, the mode manager 521 may change the first group 522-1 including DDR DRAMs to the group of which the priority is higher to guarantee the power budget to the first group 522-1 including DDR DRAMs. By changing the priority as described above, the memory box 520 of one or more embodiments may ensure data integrity by operating a power loss algorithm of SSD while quickly migrating data that is to be stored from DDR DRAM to SSD.

FIGS. 4 and 5 show examples of dividing memory devices into two memory groups, but examples are not necessarily limited thereto. Depending on the design, the number of groups may vary. Furthermore, the memory box including heterogeneous memory devices is not limited to the examples described with reference to FIGS. 4 and 5, and the memory box may include various types of memory devices (e.g., High Bandwidth Memory 3 (HBM3), NOT-AND (NAND) flash, etc.).

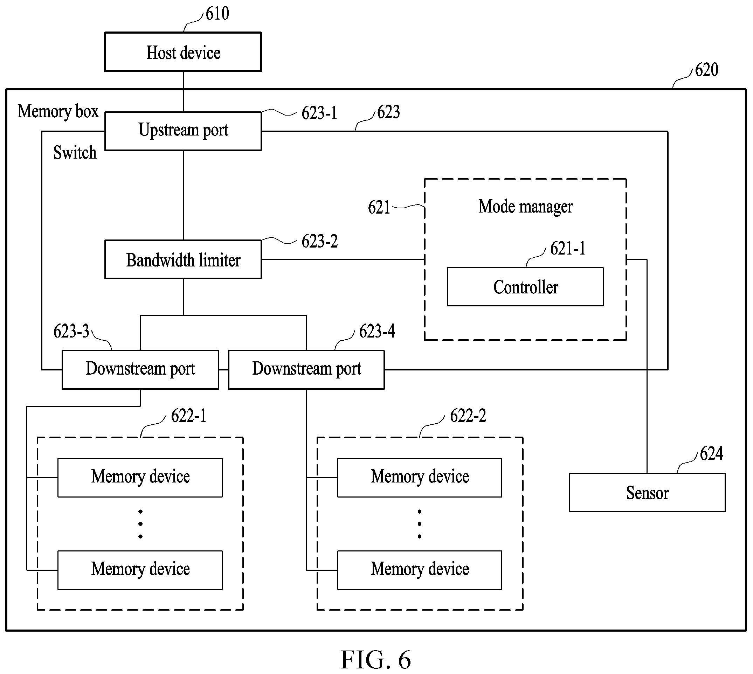

FIG. 6 is a diagram illustrating a schematic configuration of a host device and a memory box according to one or more embodiments. The description provided with reference to FIGS. 1 to 5 may apply to FIG. 6 likewise.

Referring to FIG. 6, according to an example, a computing system may include a host device 610 and a memory box 620. The host device 610 may access memory devices in the memory box 620 using an interface (e.g., a CXL interface) and use the memory devices. The memory box 620 may include the memory devices, a switch 623 (e.g., a CXL switch), and a sensor 624.

According to an example, the switch 623 may include a bandwidth limiter 623-2. The switch 623 may further include a mode manager 621. However, when an embedded processor (e.g., an embedded CPU) is present in the switch 623, the embedded processor may implement switch firmware, and may perform an operation of grouping the memory devices and dynamically determine an operation mode of the memory devices. In this case, the switch 623 may be configured without the mode manager 621. Even when the mode manager 621 is absent, the switch 623 may include a controller 621-1, and the controller 621-1 may be connected to the bandwidth limiter 623-2.

An upstream port 623-1 may be a connecting terminal that connects the host device 610 and the switch 623. The bandwidth limiter 623-2 of the switch 623 may be connected to the host device 610 through the upstream port 623-1.

A downstream port may be a connecting terminal that connects a memory device group and the switch 623. The bandwidth limiter 623-2 of the switch 623 may be connected to memory device groups through a plurality of downstream ports. For example, a first downstream port 623-3 may connect a first group 622-1 and the bandwidth limiter 623-2, and a second downstream port 623-4 may connect a second group 622-2 and the bandwidth limiter 623-2.

The bandwidth limiter 623-2 may control a bandwidth for data transfer between the host device 610 and a plurality of groups (e.g., the first group 622-1 and the second group 622-2), and the controller 621-1 may control the bandwidth limiter 623-2 such that the plurality of groups may operate in a corresponding operation mode.

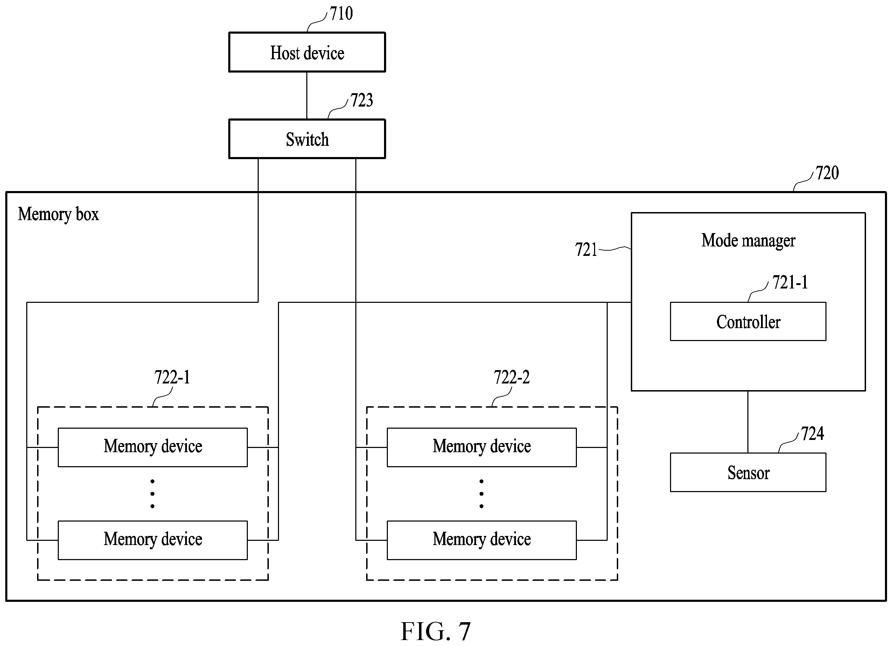

FIG. 7 is a diagram illustrating a schematic configuration of a host device and a memory box according to one or more embodiments. The description provided with reference to FIGS. 1 to 5 may apply to FIG. 7 likewise.

Referring to FIG. 7, according to an example, a computing system may include a host device 710, a switch 723, and a memory box 720. When the memory box 730 is configured, memory devices may be connected directly to an external interface. In this case, the memory devices may be connected directly to the host device 710 without a switch. Alternatively or additionally, the memory devices may be connected to the host device 710 through the switch 723 outside the memory box 720.

The memory box 720 may include the memory devices, a mode manager 721, and a sensor 724. Even in the memory box 730 without a switch therein, the mode manager 721 may divide the memory devices into a plurality of groups (e.g., a first group 722-1 and a second group 722-2) and dynamically control an operation mode between the plurality of groups. To this end, the mode manager 721 may be connected in a sideband to all the memory devices, and the controller 721-1 may be connected to each of the memory devices to control an operation mode of each of the memory devices.

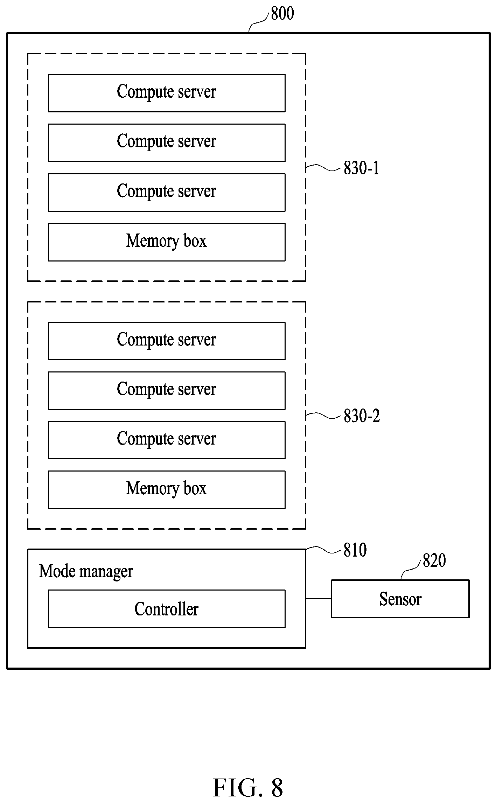

FIG. 8 is a diagram illustrating a schematic configuration of a rack cabinet according to one or more embodiments. The description provided with reference to FIGS. 1 to 7 may apply to FIG. 8 likewise, and thus, a duplicate description will be omitted.

Referring to FIG. 8, according to an example, a rack cabinet 800 may include a mode manager 810, a sensor 820, a plurality of compute servers, and a plurality of memory boxes. The rack cabinet 800 may further include a switch connecting the mode manager 810 with the plurality of compute servers and the plurality of memory boxes. For example, a network connection in the rack cabinet 800 may be configured through the switch (e.g., a CXL switch or an Ethernet switch), the mode manager 810 may be connected to the plurality of compute servers and the plurality of memory boxes through the network connection.

The sensor 820 may monitor state information of the rack cabinet 800 (e.g., the total power of the rack cabinet 800) and transmit the state information to the mode manager 810. The mode manager 810 may control all of the plurality of compute servers and the plurality of memory boxes.

The mode manager 810 may divide the plurality of compute servers and the plurality of memory boxes into a plurality of groups. The mode manager 810 may dynamically control an operation mode of the plurality of groups based on a priority and state information. The mode manager 810 may determine a current operation mode of the plurality of groups according to the priority, compare the state information with marginal resource information corresponding to the state information, and change the current operation mode of the plurality of groups based on a result of the comparing.

For example, the mode manager 810 may divide the plurality of compute servers and the plurality of memory boxes into two groups, a first group 830-1 and a second group 830-2, set a group (e.g., the first group 830-1) of which the priority is higher to be in a first operation mode to operate with a predetermined performance, and set a group (e.g., the second group 830-2) of which the priority is lower to be in a second operation mode to operate within a range not exceeding marginal resource information corresponding to the state information.

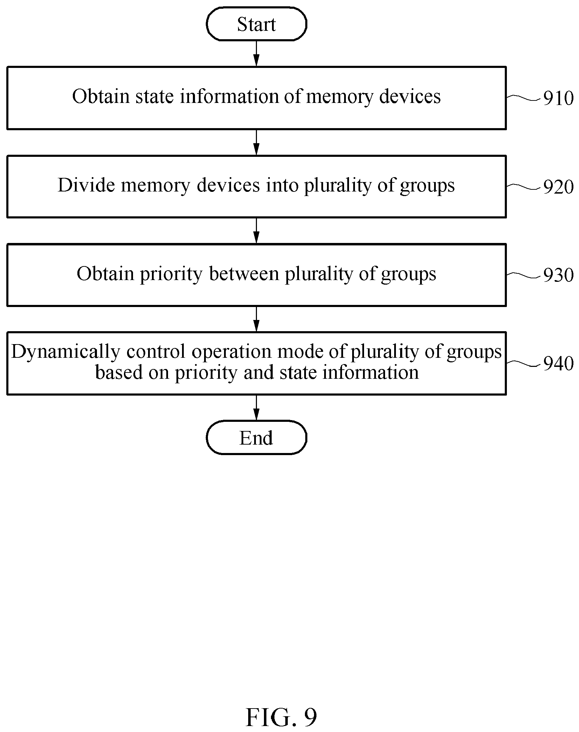

FIG. 9 is a flowchart illustrating a control method according to one or more embodiments. The description provided with reference to FIGS. 1 to 8 may apply to FIG. 9 likewise.

For ease of description, it will be described that operations 910 to 940 are performed using a memory box (e.g., the memory apparatus 220 of FIG. 2A). However, operations 910 to 940 may be performed by any suitable electronic device and in any suitable system.

Furthermore, the operations of FIG. 9 may be performed in the shown order and manner. However, the order of one or more of the operations may be changed, one or more of the operations may be omitted, and/or two or more of the operations may be performed in parallel or simultaneously, without departing from the scope of the shown example.

In operation 910, the memory box may obtain state information of memory devices. The memory box may include a sensor, and the sensor may measure state information of the entire memory box.

In operation 920, the memory box may divide the memory devices into a plurality of groups. The memory box may divide the memory devices into the plurality of groups according to characteristics of the memory devices. Alternatively or additionally, the memory devices may have the same characteristics, and the memory box may divide the memory devices into the plurality of groups according to an operational importance of the memory devices.

In operation 930, the memory box may obtain a priority between the plurality of groups. The priority may be set by a user or determined through a predetermined policy.

In operation 940, the memory box may dynamically control an operation mode of the plurality of groups based on the priority and the state information. The memory box may determine a current operation mode of the plurality of groups according to the priority, compare the state information with marginal resource information corresponding to the state information, and change the current operation mode of the plurality of groups based on a result of the comparing.

The host devices, memory apparatuses, mode managers, first controllers, second-first controllers, second-second controllers, second-third controllers, memory elements, first groups, second groups, switches, sensors, first multiplexers, second multiplexers, cores, caches, memory controllers, home agents, CXL root ports, CXL switches, CXL endpoints, CXL memory medias, DIMMs, memory boxes, sensor interfaces, second controllers, current sensors, voltage sensors, temperature sensors, controllers, upstream ports, bandwidth limiters, first downstream ports, second downstream ports, rack cabinets, host device 210, memory apparatus 220, mode manager 221, first controllers 221-1, second-first controllers 221-2, second-second controllers 221-3, second-third controllers 221-4, memory elements 222, first group 222-1, second group 222-2, switch 223, sensor 224, first multiplexer 225-1, second multiplexer 225-2, host device 260, cores 261, cache 262, memory controller 263, home agent 264, CXL root port 265, CXL switch 270, CXL endpoint 281, CXL endpoints 283, CXL memory controllers 285, memory medias 287, DIMM 290, host device 310, memory box 320, mode manager 321, sensor interface 321-1, first controller 321-2, second controller 321-3, first group 322-1, second group 322-2, switch 323, current sensor 324-1, voltage sensor 324-2, temperature sensor 324-3, host device 410, memory box 420, mode manager 421, sensor interface 421-1, first controller 421-2, second controller 421-3, first group 422-1, second group 422-2, switch 423, current sensor 424-1, voltage sensor 424-2, temperature sensor 424-3, host device 510, memory box 520, mode manager 521, sensor interface 521-1, first controller 521-2, second controller 521-3, first group 522-1, second group 522-2, switch 523, current sensor 524-1, voltage sensor 524-2, temperature sensor 524-3, host device 610, memory box 620, mode manager 621, controller 621-1, first group 622-1, second group 622-2, switch 623, upstream port 623-1, bandwidth limiter 623-2, first downstream port 623-3, second downstream port 623-4, sensor 624, host device 710, memory box 720, mode manager 721, controller 721-1, first group 722-1, second group 722-2, switch 723, sensor 724, rack cabinet 800, mode manager 810, sensor 820, first group 830-1, second group 830-2, and other apparatuses, devices, units, modules, and components disclosed and described herein with respect to FIGS. 1-9 are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples.

Therefore, in addition to the above and all drawing disclosures, the scope of the present invention is defined by the claims.

## Claims

1. A memory box (320) comprising:
memory devices comprising memory cells configured to store data;
a sensor (224) configured to measure state information of the memory devices; and
a mode manager (221) configured to divide the memory devices into a plurality of groups (222), receive a priority between the plurality of groups (222) from a host device (210; 310), receive the state information from the sensor (224), and dynamically control an operation mode of the plurality of groups (222) based on the priority and the state information,
wherein the memory devices have same characteristics, and the mode manager is further configured to divide the memory devices into the plurality of groups according to an operational importance of the memory devices.

2. The memory box of claim 1, wherein, for the dynamically controlling of the operation mode, the mode manager is further configured to determine a current operation mode of the plurality of groups according to the priority, compare the state information with marginal resource information corresponding to the state information, and change the current operation mode of the plurality of groups based on a result of the comparing; or
wherein, for the dynamically controlling of the operation mode, the mode manager is further configured to set a group of the plurality of groups of which the priority is higher to be in a first operation mode to operate with a predetermined performance, and set a group of the plurality of groups of which the priority is lower to be in a second operation mode to operate within a range not exceeding marginal resource information corresponding to the state information, and wherein the mode manager comprises: a first controller configured to control the group of which the priority is higher to operate in the first operation mode; and a second controller configured to control the group of which the priority is lower to operate in the second operation mode.

3. The memory box of claim 1 or 2, wherein, for the dividing of the memory devices, the mode manager is further configured to divide the memory devices into the plurality of groups according to characteristics of the memory devices.

4. The memory box of one of claims 1 to 3, wherein the mode manager comprises a controller configured to control the plurality of groups to operate in a corresponding operation mode.

5. The memory box of one of claims 1 to 4, wherein the memory devices comprise Compute Express Link, CXL, memory devices.

6. The memory box of one of claims 1 to 5, further comprising a switch configured to connect the memory devices to the host device,
wherein, for the receiving of the priority, the mode manager is configured to receive the priority between the plurality of groups from the host device through the switch.

7. A control method comprising:
obtaining state information of memory devices from a sensor;
dividing the memory devices into a plurality of groups;
obtaining a priority between the plurality of groups from a host device; and
dynamically controlling the operation mode of the plurality of groups based on the priority and the state information,
wherein the memory devices have same characteristics, and the dividing comprises dividing the memory devices into the plurality of groups according to an operational importance of the memory devices.

8. The control method of claim 7, wherein the dynamically controlling of the operation mode comprises determining a current operation mode of the plurality of groups according to the priority, comparing the state information with marginal resource information corresponding to the state information, and changing the current operation mode of the plurality of groups based on a result of the comparing; or
wherein the dividing comprises dividing the memory devices into the plurality of groups according to characteristics of the memory devices.

9. A switch comprising a processor configured to operate according to claim 7 or 8.

10. The switch of claim 9, further comprising:
a bandwidth limiter configured to control a bandwidth for data transfer between the host device and the plurality of groups; and
a controller configured to control the bandwidth limiter such that the plurality of groups operate in a corresponding operation mode.

11. A memory box comprising:
the switch of claim 9, wherein the switch is configured to connect the memory device to the host device;
the memory devices comprising memory cells configured to store data; and
the sensor configured to measure the state information.

12. A computing system comprising:
a host device;
a plurality of memory boxes according to one of claims 1 to 6.

13. A rack comprising:
the computing system of claim 12; and
a plurality of compute servers comprising the host device,
wherein the state information is of the compute servers and the memory boxes, and
wherein the mode manager is configured to divide the compute servers and the memory boxes into the plurality of groups, receive a priority between the plurality of groups, and dynamically control the operation mode of the plurality of groups based on the priority and the state information.

## Patentansprüche

1. Speicherbox (320), umfassend:
Speichervorrichtungen, umfassend Speicherzellen, die zum Speichern von Daten ausgebildet sind;
einen Sensor (224), ausgebildet zum Messen einer Zustandsinformation der Speichervorrichtungen; und
einen Modusmanager (221), ausgebildet zum Unterteilen der Speichervorrichtungen in eine Vielzahl von Gruppen (222), Empfangen einer Priorität zwischen der Vielzahl von Gruppen (222) von einer Hostvorrichtung (210; 310), Empfangen der Zustandsinformation vom Sensor (224) und dynamischen Steuern eines Betriebsmodus der Vielzahl von Gruppen (222) basierend auf der Priorität und der Zustandsinformation,
wobei die Speichervorrichtungen die gleichen Eigenschaften aufweisen und der Modusmanager ferner zum Unterteilen der Speichervorrichtungen in die Vielzahl von Gruppen gemäß einer Betriebsbedeutung der Speichervorrichtungen unterteilt.

2. Speicherbox nach Anspruch 1, wobei zum dynamischen Steuern des Betriebsmodus der Modusmanager ferner zum Bestimmen eines aktuellen Betriebsmodus der Vielzahl von Gruppen gemäß der Priorität, Vergleichen der Zustandsinformation mit einer marginalen Ressourceninformation entsprechend der Zustandsinformation und Ändern des aktuellen Betriebsmodus der Vielzahl von Gruppen basierend auf einem Ergebnis des Vergleichs ausgebildet ist; oder
wobei zum dynamischen Steuern des Betriebsmodus der Modusmanager ferner zum Festlegen einer Gruppe der Vielzahl von Gruppen, deren Priorität höher ist, als in einem ersten Betriebsmodus befindlich für einen Betrieb mit einer vorbestimmten Leistung und Festlegen einer Gruppe der Vielzahl von Gruppen, deren Priorität niedriger ist, als in einem zweiten Betriebsmodus befindlich für einen Betrieb innerhalb eines Bereichs, der die marginale Ressourceninformation entsprechend der Zustandsinformation nicht überschreitet, ausgebildet ist, wobei der Modusmanager umfasst: ein erstes Steuergerät, ausgebildet zum Steuern der Gruppe, deren Priorität höher ist, für einen Betrieb im ersten Betriebsmodus; und ein zweites Steuergerät, ausgebildet zum Steuern der Gruppe, deren Priorität niedriger ist, für einen Betrieb im zweiten Betriebsmodus.

3. Speicherbox nach Anspruch 1 oder 2, wobei zum Unterteilen der Speichervorrichtungen der Modusmanager ferner zum Unterteilen der Speichervorrichtungen in die Vielzahl von Gruppen gemäß Eigenschaften der Speichervorrichtungen ausgebildet ist.

4. Speicherbox nach einem der Ansprüche 1 bis 3, wobei der Modusmanager ein Steuergerät umfasst, das zum Steuern der Vielzahl von Gruppen zum Betrieb in einem entsprechenden Betriebsmodus ausgebildet ist.

5. Speicherbox nach einem der Ansprüche 1 bis 4, wobei die Speichervorrichtungen Compute-Express-Link-(CXL-)Speichervorrichtungen umfassen.

6. Speicherbox nach einem der Ansprüche 1 bis 5, ferner umfassend einen Schalter, der zum Verbinden der Speichervorrichtungen mit der Hostvorrichtung ausgebildet ist,
wobei zum Empfangen der Priorität der Modusmanager zum Empfangen der Priorität zwischen der Vielzahl von Gruppen von der Hostvorrichtung durch den Schalter ausgebildet ist.

7. Steuerverfahren, umfassend:
Erhalten einer Zustandsinformation von Speichervorrichtungen von einem Sensor;
Unterteilen der Speichervorrichtungen in eine Vielzahl von Gruppen;
Erhalten einer Priorität zwischen der Vielzahl von Gruppen von einer Hostvorrichtung; und
dynamisches Steuern des Betriebsmodus der Vielzahl von Gruppen basierend auf der Priorität und der Zustandsinformation,
wobei die Speichervorrichtungen die gleichen Eigenschaften aufweisen und das Unterteilen das Unterteilen der Speichervorrichtungen in die Vielzahl von Gruppen gemäß einer Betriebsbedeutung der Speichervorrichtungen umfasst.

8. Steuerverfahren nach Anspruch 7, wobei das dynamischen Steuern des Betriebsmodus das Bestimmen eines aktuellen Betriebsmodus der Vielzahl von Gruppen gemäß der Priorität, das Vergleichen der Zustandsinformation mit einer marginalen Ressourceninformation entsprechend der Zustandsinformation und das Ändern des aktuellen Betriebsmodus der Vielzahl von Gruppen basierend auf einem Ergebnis des Vergleichs umfasst; oder
wobei das Unterteilen das Unterteilen der Speichervorrichtungen in die Vielzahl von Gruppen gemäß Eigenschaften der Speichervorrichtungen umfasst.

9. Schalter, umfassend einen Prozessor, der für einen Betrieb gemäß Anspruch 7 oder 8 ausgebildet ist.

10. Schalter nach Anspruch 9, ferner umfassend:
einen Bandbreitenbegrenzer, ausgebildet zum Steuern einer Bandbreite für die Datenübertragung zwischen der Hostvorrichtung und der Vielzahl von Gruppen; und
ein Steuergerät, ausgebildet zum Steuern des Bandbreitenbegrenzers, so dass die Vielzahl von Gruppen in einem entsprechenden Betriebsmodus betrieben wird.

11. Speicherbox, umfassend:
den Schalter nach Anspruch 9, wobei der Schalter zum Verbinden der Speichervorrichtung mit der Hostvorrichtung ausgebildet ist;
die Speichervorrichtungen, umfassend Speicherzellen, die zum Speichern von Daten ausgebildet sind; und den Sensor, ausgebildet zum Messen der Zustandsinformation.

12. Computersystem, umfassend:
eine Hostvorrichtung;
eine Vielzahl von Speicherboxen nach einem der Ansprüche 1 bis 6.

13. Rack, umfassend:
das Computersystem nach Anspruch 12; und
eine Vielzahl von Computerservern, umfassend die Hostvorrichtung,
wobei die Zustandsinformation von den Computerservern und den Speicherboxen stammt, und
wobei der Modusmanager zum Unterteilen der Computerserver und der Speicherboxen in die Vielzahl von Gruppen, Empfangen einer Priorität zwischen der Vielzahl von Gruppen und dynamischen Steuern des Betriebsmodus der Vielzahl von Gruppen basierend auf der Priorität und der Zustandsinformation ausgebildet ist.

## Revendications

1. Boîte mémoire (320) comprenant :
des dispositifs de mémoire comprenant des cellules de mémoire configurées pour stocker des données ;
un capteur (224) configuré pour mesurer des informations d'état des dispositifs de mémoire ; et
un gestionnaire de mode (221) configuré pour diviser les dispositifs de mémoire en une pluralité de groupes (222), recevoir une priorité entre la pluralité de groupes (222) en provenance d'un dispositif hôte (210 ; 310), recevoir les informations d'état en provenance du capteur (224), et commander dynamiquement un mode d'opération de la pluralité de groupes (222) sur la base de la priorité et des informations d'état,
dans laquelle les dispositifs de mémoire ont les mêmes caractéristiques, et le gestionnaire de mode est en outre configuré pour diviser les dispositifs de mémoire en la pluralité de groupes selon une importance opérationnelle des dispositifs de mémoire.

2. Boîte mémoire selon la revendication 1, dans laquelle, pour la commande dynamique du mode d'opération, le gestionnaire de mode est en outre configuré pour déterminer un mode d'opération courant de la pluralité de groupes selon la priorité, comparer les informations d'état avec des informations de ressources marginales correspondant aux informations d'état, et modifier le mode d'opération courant de la pluralité de groupes sur la base d'un résultat de la comparaison ; ou
dans laquelle, pour la commande dynamique du mode d'opération, le gestionnaire de mode est en outre configuré pour établir un groupe de la pluralité de groupes dont la priorité est plus élevée pour qu'il soit dans un premier mode d'opération pour qu'il fonctionne avec une performance prédéterminée, et établir un groupe de la pluralité de groupes dont la priorité est inférieure pour qu'il soit dans un second mode d'opération pour qu'il fonctionne dans une plage ne dépassant pas les informations de ressources marginales correspondant aux informations d'état, et dans laquelle le gestionnaire de mode comprend : un premier dispositif de commande configuré pour commander le groupe dont la priorité est plus élevée pour qu'il fonctionne dans le premier mode d'opération ; et un second dispositif de commande configuré pour commander le groupe dont la priorité est inférieure pour qu'il fonctionne dans le second mode d'opération.

3. Boîte mémoire selon la revendication 1 ou 2, dans laquelle, pour la division des dispositifs de mémoire, le gestionnaire de mode est en outre configuré pour diviser les dispositifs de mémoire en la pluralité de groupes selon des caractéristiques des dispositifs de mémoire.

4. Boîte mémoire selon l'une des revendications 1 à 3, dans laquelle le gestionnaire de mode comprend un dispositif de commande configuré pour commander la pluralité de groupes pour qu'ils fonctionnent dans un mode d'opération correspondant.

5. Boîte mémoire selon l'une des revendications 1 à 4, dans laquelle les dispositifs de mémoire comprennent des dispositifs de mémoire Compute Express Link, CXL.

6. Boîte mémoire selon l'une des revendications 1 à 5, comprenant en outre un commutateur configuré pour connecter les dispositifs de mémoire au dispositif hôte, dans laquelle, pour la réception de la priorité, le gestionnaire de mode est configuré pour recevoir la priorité entre la pluralité de groupes en provenance du dispositif hôte via le commutateur.

7. Procédé de commande comprenant :
l'obtention d'informations d'état de dispositifs de mémoire auprès d'un capteur ;
la division des dispositifs de mémoire en une pluralité de groupes ;
l'obtention d'une priorité entre la pluralité de groupes auprès d'un dispositif hôte ; et
la commande dynamique du mode d'opération de la pluralité de groupes sur la base de la priorité et des informations d'état,
dans lequel les dispositifs de mémoire ont les mêmes caractéristiques, et la division comprend la division des dispositifs de mémoire en la pluralité de groupes selon une importance opérationnelle des dispositifs de mémoire.

8. Procédé de commande selon la revendication 7, dans lequel la commande dynamique du mode d'opération comprend la détermination d'un mode d'opération courant de la pluralité de groupes selon la priorité, la comparaison des informations d'état avec des informations de ressources marginales correspondant aux informations d'état, et le changement du mode d'opération courant de la pluralité de groupes sur la base d'un résultat de la comparaison ; ou
dans lequel la division comprend la division des dispositifs de mémoire en la pluralité de groupes selon les caractéristiques des dispositifs de mémoire.

9. Commutateur comprenant un processeur configuré pour fonctionner selon la revendication 7 ou 8.

10. Commutateur selon la revendication 9, comprenant en outre :
un limiteur de bande passante configuré pour commander une bande passante pour un transfert de données entre le dispositif hôte et la pluralité de groupes ; et
un dispositif de commande configuré pour commander le limiteur de bande passante de sorte que la pluralité de groupes fonctionne dans un mode d'opération correspondant.

11. Boîte mémoire comprenant :
le commutateur selon la revendication 9, dans laquelle le commutateur est configuré pour connecter le dispositif de mémoire au dispositif hôte ;
les dispositifs de mémoire comprenant des cellules de mémoire configurées pour stocker des données ; et
le capteur configuré pour mesurer les informations d'état.

12. Système informatique comprenant :
un dispositif hôte ;
une pluralité de boîtes mémoire selon l'une des revendications 1 à 6.

13. Bâti comprenant :
le système informatique selon la revendication 12 ; et
une pluralité de serveurs de calcul comprenant le dispositif hôte,
dans lequel les informations d'état proviennent des serveurs de calcul et des boîtes mémoire, et
dans lequel le gestionnaire de mode est configuré pour diviser les serveurs de calcul et les boîtes mémoire en la pluralité de groupes, recevoir une priorité entre la pluralité de groupes, et commander dynamiquement le mode d'opération de la pluralité de groupes base de la priorité et des informations d'état.
